Europäisches Patentamt

European Patent Office

Office européen des brevets

(11) Veröffentlichungsnummer : **0 017 212**
**B1**

(12) # EUROPÄISCHE PATENTSCHRIFT

(45) Veröffentlichungstag der Patentschrift :
03.11.82

(21) Anmeldenummer : 80101718.7

(22) Anmeldetag : 01.04.80

(51) Int. Cl.³ : **C 08 L 23/28, C 08 K 3/20,**
**C 08 K 3/34, C 08 J 3/00 //**
**(C08L23/28, 27/06)**

(54) **Rieselfähiges Chlorpolyäthylen, dessen Herstellung und Verwendung.**

(30) Priorität : 06.04.79 DE 2913855

(43) Veröffentlichungstag der Anmeldung :
15.10.80 (Patentblatt 80/21)

(45) Bekanntmachung des Hinweises auf die Patenterteilung : 03.11.82 Patentblatt 82/44

(84) Benannte Vertragsstaaten :
**BE DE FR GB IT NL**

(56) Entgegenhaltungen :
**DE A 2 619 685**
**FR A 2 156 557**

(73) Patentinhaber : HOECHST AKTIENGESELLSCHAFT
Postfach 80 03 20
D-6230 Frankfurt/Main 80 (DE)

(72) Erfinder : Busch, Wolfram
Akazienring 38
D-6203 Hochheim am Main (DE)
Erfinder : Brandrup, Johannes, Dr.
Am Allersberg 6
D-6200 Wiesbaden (DE)
Erfinder : Sommer, Werner
Paul-Lincke-Weg 6
D-6232 Bad Soden am Taunus (DE)
Erfinder : Semmler, Horst, Dr.
Merricher Strasse 32
D-5040 Brühl (DE)

Imprimerie Jouve, 18, rue St-Denis, 75001 Paris, France

## Rieselfähiges Chlorpolyäthylen, dessen Herstellung und Verwendung

Aus Polyäthylen läßt sich durch Chlorieren Chlorpolyäthylen herstellen, das kautschukartigen Charakter hat und das — wenn bestimmte Reaktionsbedingungen eingehalten werden — auch feinteilig sein kann. Ein derartiges Produkt ist im allgemeinen zunächst schütt- und rieselfähig, verliert diese Eigenschaften selbst unter normalen Lagerbedingungen und bei gewöhnlicher Temperatur aufgrund von Agglomerationsvorgängen jedoch mehr oder weniger rasch, wodurch sich großvolumige Partikel bilden, die sich mit den üblichen Methoden nicht mehr zerkleinern lassen. Ein derartiges Material ist dann nur noch schlecht und ungenügend weiterverarbeitbar.

Es hat daher nicht an Versuchen gefehlt, die Lagerstabilität entsprechend zu erhöhen. Ein Weg besteht darin, der bereits bei der Chlorierung beginnenden Agglomeration durch Zugabe von sogenannten Agglomerationshemmern entgegenzuwirken. Diese Stoffe werden von den sich bildenden Chlorpolyäthylen-Partikeln aufgenommen und entfalten dann auch noch im fertigen Produkt eine gewisse agglomerationshemmende Wirkung. Beispiele für derartige Zusatzstoffe sind Talkum (vgl. US-A 3 454 544), Kaoline, Bentonite und Fullererden (vgl. JP-A 72 11 829) sowie bestimmte Fettsäuren, ggf. zusammen mit nichtionischen Detergentien (vgl. US-A 3 429 865). Eine den Praxisbedingungen genügende Lagerstabilität läßt sich damit jedoch nicht erreichen.

Es ist weiterhin auch schon zur Lösung dieses Problems vorgeschlagen worden, das nach der Chlorierung und vor der Trocknung erhaltene feinteilige Material nachträglich oberflächlich zu imprägnieren und somit dem Verkleben des Chlorpolyäthylens unter verschärften Lagerbedingungen, wie z.B. Silolagerung unter hohen Flächendrücken, Stapelung von Sackware über einen größeren Zeitraum und ggf. bei Temperaturen über den üblichen Werten, entgegenzuwirken. Hierzu werden eine Reihe von organischen Materialien verwendet wie z.B. Salze von Fettsäuren wie Zn-, Cd-, Sn-, Pb- oder Ba-Stearat (vgl. JP-A Sho 46-10 660).

Es zeigt sich jedoch, daß dabei erhebliche Mengen an Imprägnierungsmittel erforderlich sind, wodurch zwar eine ausreichende Lagerstabilität gewährleistet, jedoch die Verarbeitbarkeit in nachteiliger Weise beeinflußt wird. So beeinträchtigen hohe Anteile anorganischer Zusatzstoffe, die zumeist gute Adsorptionseigenschaften besitzen, die Verarbeitungsviskosität, reduzieren in vielen Fällen die thermische Stabilität, erhöhen den Abrieb in Verarbeitungsmaschinen, senken die Verschweißbarkeit von Folien und Profilen etc. Besonders ungünstig kann hierbei die Verwendung von Salzen von Fettsäuren werden, da diese Verbindungen ausgeprägte Gleitmittelwirkung zeigen und dadurch die Friktionsverhältnisse für einen Aufschluß erheblich verschlechtert werden können.

In der DE-A 2 260 525 ist schließlich noch eine Verfahrensweise beschrieben, bei der Kieselsäure und Silikonöl als Agglomerationshemmer während der Chlorierung anwesend sind und bei der nachträglich zur Erhöhung der Lagerstabilität dem zu trocknenden Produkt Polyvinylchlorid, gegebenenfalls zusammen mit Salzen von Fettsäuren, sowie Salzen der phosphorigen Säure oder der Kieselsäure zugegeben werden können. Über die dabei benutzten Mengen sowie die Teilchengrößen finden sich in dieser Literaturstelle keine Angaben. Für eine ausreichende Lagerstabilität sind jedoch auch hier erhebliche Mengen erforderlich, was die erwähnten Nachteile zur Folge hat.

Es war daher Aufgabe vorliegender Erfindung, ein Chlorpolyäthylen bereitzustellen, das die Nachteile des Standes der Technik nicht aufweist und das insbesondere rieselfähig und freifließend ist und diese Eigenschaften auch nach längerer Lagerung nicht verliert, dabei aber gleichzeitig keine Beeinträchtigung der Verarbeitungseigenschaften zeigt.

Diese Aufgabe wird erfindungsgemäß durch ein Chlorpolyäthylen gelöst, das mit einem Gemisch aus bestimmten feinteiligen Vinylchloridpolymerisaten und bestimmten feinteiligen, anorganischen Zusatzstoffen imprägniert ist.

Die Erfindung betrifft daher ein pulverförmiges Chlorpolyäthylen, gekennzeichnet durch ein mittleres Molekulargewicht $\overline{M}_w$ von $1,2 \times 10^4$ bis $4 \times 10^6$, einen Chlorgehalt von 20 bis 50 Gew.-% und einen Gehalt von

a) 0,5 bis 10 Gewichtsteilen, bezogen auf 100 Gewichtsteile Chlorpolyäthylen, feinteiligem Vinylchloridpolymerisat mit einem mittleren Teilchendurchmesser von 2 bis 20 µm und

b) 0,05 bis 2 Gewichtsteilen, bezogen auf 100 Gewichtsteile Chlorpolyäthylen, feinteiligen, anorganischen Zusatzstoffen, die hydrophobe Oberflächeneigenschaften, einen mittleren Teilchendurchmesser von höchstens 10 µm, eine Ölzahl (DIN 53 199) von mindestens 60 % und/oder eine Oberfläche nach BET von mindestens 100 m²/g aufweisen, wobei das Mengenverhältnis der Zusatzstoffe (a) und (b) zwischen 30 : 1 bis 2 : 1 liegt und wobei sich beide Zusatzstoffe überwiegend an der Oberfläche der Chlorpolyäthylen-Partikel befinden.

Weiterhin betrifft die Erfindung ein Verfahren zur Herstellung eines derartigen Chlorpolyäthylens, wobei das Chlorpolyäthylen durch Chlorierung aus Polyäthylen mit einem mittleren Molekulargewicht $\overline{M}_w$ von $1 \times 10^4$ bis $2 \times 10^6$ hergestellt, anschließend getrocknet, gemahlen und vor oder nach der Mahlung gegebenenfalls mit den an sich bekannten Stabilisatoren, Antioxydantien und anderen Additiven versetzt wird, dadurch gekennzeichnet, daß das gemahlene Chlorpolyäthylen-Pulver mit den beiden oben genannten Zusatzstoffen (a) und (b) vermischt wird. Schließlich hat die Erfindung auch noch die Verwendung eines derartigen Chlorpolyäthylens zur Herstellung von Stoffgemischen zum Gegenstand.

Das erfindungsgemäße Chlorpolyäthylen besitzt vorzugsweise ein mittleres Molekulargewicht $\overline{M}_w$ von $3 \times 10^4$ bis $5 \times 10^5$, einen Chlorgehalt von vorzugsweise 30 bis 45 Gew.-%, eine Restkristallinität von 0 bis 30 %, bezogen auf den Kristallisationsgrad des zur Herstellung verwendeten Polyäthylens, speziell 0 bis 20 %, gemessen nach der Differentialthermoanalyse, und einen Quellwert (gemäß DE-A 2 343 982) von 10 bis 40 %, insbesondere 12 bis 35 %. Weiterhin beträgt die Oberflächenhärte nach Shore A (DIN 53 505) 50 bis 90°, vorzugsweise 55 bis 70°. Die mittlere Korngröße des Chlorpolyäthylen-Pulvers liegt im allgemeinen bei 250 bis 500 μm, vorzugsweise bei 300 bis 400 μm und die Korngrößenverteilung im allgemeinen zwischen 80 % höchstens 500 μm und höchstens 10 % kleiner als 50 μm, vorzugsweise 80 % höchstens 400 μm und höchstens 10 % kleiner als 100 μm.

Als Imprägnierkomponente (a) kommen grundsätzlich alle entsprechend feinteiligen Vinylchloridpolymerisate mit Vinylchloridgehalten von vorzugsweise mehr als 80 Gew.-% in Frage. Speziell wird Vinylchloridhomopolymerisat (PVC) verwendet, dessen Herstellung nach den bekannten Polymerisationsverfahren wie Emulsions-, Masse- und Gasphasenverfahren erfolgen kann. Bevorzugt wird Emulsions-PVC (E-PVC) eingesetzt, dessen Emulgatorgehalt vorzugsweise nicht höher als 2, insbesondere 1,5 Gew.-% ist, so daß es weitgehend hydrophobe Eigenschaften besitzt. Falls die Komponente (a) beispielsweise aufgrund von weniger stark ausgeprägten hydrophoben Eigenschaften eine geringere agglomerationshemmende Wirkung hat, so läßt sich dies durch entsprechend höhere Einsatzmengen und/oder durch entsprechende nachträgliche Hydrophobierung, wie etwa durch Imprägnierung der Partikel mit Calciumstearat ausgleichen. Der K-Wert (DIN 53 726) liegt in der Regel zwischen 60 und 80, vorzugsweise 70 und 75 und der mittlere Teilchendurchmesser vorzugsweise zwischen 5 und 15 μm. Für die Teilchengrößenverteilung empfiehlt sich ein Bereich zwischen 0,5 (1 Gew.-%) und 80 (1 Gew.-%) μm, vorzugsweise 1 (1 Gew.-%) und 50 (1 Gew.-%) μm (Sedimentationsanalyse). Es können auch Gemische der verschiedenen Vinylchloridpolymerisate als Komponente (a) eingesetzt werden.

Die beanspruchte Menge an Komponente (a) von 0,5 bis 10 Gewichtsteile pro 100 Gewichtsteile Chlorpolyäthylen ist an und für sich nicht kritisch und kann unter- bzw. überschritten werden, wenngleich dann unter Inkaufnahme gewisser Nachteile, wie verstärktes Agglomieren der Chlorpolyäthylen-Partikel bzw. steigende Oberflächenhärte. Der Vorzugsbereich beträgt 2 bis 7 Gewichtsteile.

Die Imprägnierkomponente (b) liegt im allgemeinen feinteiliger als die Komponente (a) vor, wobei die Teilchengröße (Primärteilchen oder Agglomerate) vorzugsweise höchstens 5 μm beträgt. Ein weiteres Merkmal dieser Komponente (b) besteht in ihren weitgehend hydrophoben Eigenschaften, die gegebenenfalls durch entsprechende Oberflächenbehandlung erzeugt werden. Die Hydrophobie äußert sich in einer verminderten Feuchtigkeitsaufnahme, sie beträgt 1/5 bis 1/20 des am nicht hydrophobisierten Material gemessenen Wertes (vgl. Degussa Firmenschrift « Hydrophobisiertes [R]Aerosil »). Außerdem besitzt sie ein hohes Adsorptionsvermögen, ausgedrückt in einer hohen Ölzahl von mindestens 60 %, vorzugsweise mindestens 80 %. Diese Ölzahl (Ölaufnahmevermögen) wird dabei nach DIN 53 199 wie folgt bestimmt :

Zu ca. 10-30 g der zu vermessenden Substanz läßt man unter Verrühren mit einem Spatel Leinöl zutropfen und bestimmt den Punkt, an dem die angeteigte Substanz kittartig ist und auf einer Glasoberfläche nicht verschmiert. Die Ölzahl ergibt sich dann aus g Leinöl/100 g Substanz.

Zusätzlich oder anstelle dieser hohen Ölzahl ist auch die Oberfläche nach BET hoch und liegt bei mindestens 100 m²/g, vorzugsweise bei 100 bis 150 m²/g.

Als Komponente (b) kommen vor allem pyrogen gewonnenes Aluminiumoxyd sowie calciniertes, d.h. thermisch auf Temperaturen von vorzugsweise über 600 °C nachbehandeltes Aluminiumsilikat in Frage, wobei letzteres vorzugsweise zusätzlich hydrophobiert wird. Als speziell einzusetzende Materialien sind hier weiterhin zu nennen : pyrogen gewonnenes Siliziumdioxid, gefällte Kieselsäure, Silikate, darunter vor allem natürlich vorkommende Mineralien, wie Talkum, Kaolin, Pyrophyllit, Feldspäte etc., wobei die vorstehend aufgeführten Materialien in der Regel zu hydrophobieren sind. Grundsätzlich kommen auch die weiteren als Agglomerationshemmer für Chlorpolyäthylen bekannten festen anorganischen Zusatzstoffe, wie Bentonite, Fullererden udgl. in Frage, sofern sie die obigen Bedingungen erfüllen.

Es können auch Gemische der betreffenden Verbindungen als Komponente (b) eingesetzt werden.

Die Hydrophobierung erfolgt in bekannter Weise, in dem man die betreffenden, zur Trocknung thermisch vorbehandelten Stoffe beispielsweise mit Silanverbindungen, insbesondere Dimethyldichlorsilan ($(CH_3)_2Cl_2Si$) imprägniert, wobei die Menge an Silanverbindungen vorzugsweise 1 bis 2 Gew.-% beträgt. Die Silvanverbindung kann dabei — falls sie flüssig vorliegt — direkt oder auch in Lösung eingesetzt werden. Das Imprägnat wird anschließend dann bei höheren Temperaturen, beispielsweise bei ca. 400 °C nachbehandelt. Diese Verfahrensweise (sog. Silanisierung) ist zum Beispiel in (H. Brümmer, D. Schutte, Chemiker-Zeitung/Chemische Apparatur 89 (1965)) S. 437 beschrieben. Es resultieren ausgeprägt hydrophobe Pulver mit stark reduziertem Wasseraufnahmevermögen.

Neben Silanverbindungen als Hydrophobierungsmittel kommen auch andere hierfür bekannte Verbindungen in Frage, wie etwa Stearinsäure oder deren Salze. Im erstgenannten Fall werden die Stearinsäure bzw. die Stearate vorzugsweise in Mengen von 1 bis 3 Gew.-% eingesetzt und das zu imprägnierende Material zur Trocknung auf beispielsweise 150 bis 300 °C vorerhitzt und dann auf ca. 80 bis 120 °C abgekühlt. Bei direkter Verwendung der Stearinsäure bzw. von niedrig schmelzenden Stearaten erfolgt dann ein Aufschmelzen auf die zu imprägnierenden Partikel. Alternativ ist hier natürlich auch der Einsatz entsprechender Lösungen möglich.

Die Menge an Komponente (b) beträgt 0,05 bis 2, vorzugsweise 0,1 bis 0,6 Gewichtsteile pro 100 Gewichtsteile Chlorpolyäthylen. Im Prinzip kann auch hier die erwähnte Unter- bzw. Obergrenze überschritten werden, wenngleich beispielsweise bei kleineren Mengen als 0,05 Gewichtsteilen die Menge an Komponente (a) so stark erhöht werden muß, daß dadurch Produktverschlechterungen auftreten.

Das Mengenverhältnis von Komponente (a) zu Komponente (b) beträgt vorzugsweise 20 : 1 bis 5 : 1.

Die Imprägnierstoffe (a) und (b) befinden sich bei dem erfindungsgemäßen Chlorpolyäthylen im wesentlichen an der Oberfläche der betreffenden Partikel. Unter « Oberfläche » sei hier vorzugsweise der Bereich bis zu einer Tiefe von ca. 5 µm, vorzugsweise ca. 1 µm verstanden.

Das erfindungsgemäße Chlorpolyäthylen kann weiterhin die üblichen Zusatzstoffe, wie Stabilisatoren, Antioxydantien, UV-Stabilisatoren, Pigmente, Farbstoffe, Füllstoffe, Verarbeitungshilfsmittel udgl. enthalten, wie sie beispielsweise in der DE-A 2 456 278, der US-A 3 641 216 oder in H. Kainer « Polyvinylchlorid und Vinylchlorid-Mischpolymerisate », Springer-Verlag, Berlin, Heidelberg, New York (1965), S. 209 bis 258 und 275 bis 329 beschrieben sind.

Zur Herstellung des erfindungsgemäßen imprägnierten Chlorpolyäthylens kann ein Chlorpolyäthylen eingesetzt werden, das nach den bekannten Chlorierungsverfahren aus Polyäthylen gewonnen wurde, also beispielsweise durch Chlorierung in wäßriger Suspension, in Lösung oder in der Gasphase. Vorzugsweise wird nach dem erstgenannten Suspensionsverfahren gearbeitet, wobei die Chlorierungstemperaturen vorzugsweise mindestens teilweise oberhalb des Kristallitschmelzpunktes des Polyäthylens liegen, wie beispielsweise in der GB-A 828 938 beschrieben.

Zweckmäßigerweise beginnt die Chlorierung im Temperaturbereich von 20 bis 100 °C, vorzugsweise 70-90 °C und wird dann unter kontinuierlicher Temperatursteigerung fortgeführt und bei Temperaturen im Bereich von 110 bis 140 °C beendet. Es ist aber auch möglich, die Chlorierung als Zweistufenreaktion durchzuführen, d.h. bei 20 bis 100 °C zu beginnen, danach die Temperatur unter Stoppen der Chlorzufuhr auf 120 bis 140 °C zu erhöhen und dann die Chlorierung fortzuführen und zu beenden oder aber die gesamte Chlorierung zwischen 110 und 140 °C durchzuführen.

Als Reaktionsmedium dient bei dem Suspensionsverfahren Wasser oder vorzugsweise 10 bis 35 %ige, insbesonders 15 bis 25 %ige Salzsäure. Um eine Koagulation und Agglomeration der anfallenden Chlorpolyäthylenpartikel weitgehend zu unterbinden, was sich besonders bei zunehmendem Chlorgehalt und abnehmendem Restkristallitgehalt störend bemerkbar machen kann, empfiehlt sich der Zusatz der hierfür bekannten Agglomerationshemmer, wie Talkum, Kaolin, Kieselsäure, Quarzpulver, Bariumsulfat, Polyvinylchlorid udgl. Speziell für diesen Zweck geeignet ist der Zusatz von 0,1 bis 1 Gew.-% Kieselsäure und 0,01 bis 1 Gew.-% Silikonöl (Polysiloxan) wie in der DE-A 2 260 525 beschrieben.

Die Chlorierung erfolgt in der Regel ohne Verwendung von Initiatoren, jedoch kann in manchen Fällen die Anwesenheit derartiger Verbindungen wie beispielsweise Persulfate und Peroxide von Vorteil sein. Gegebenenfalls kann die Reaktion auch durch Licht oder energiereiche Strahlung initiiert werden.

Je nach dem Chlorierungsprogramm, d.h. je nach zugeführter Chlormenge, der Temperaturführung und der Reaktionszeit läßt sich mehr eine statistische Chlorverteilung, die zu einem Produkt mit vor allem hoher Kautschukelastizität oder mehr eine blockartige Chlorverteilung, was vor allem die Fließeigenschaften günstig beeinflußt, erhalten. Die speziellen Reaktionsbedingungen sind dabei vom Fachmann durch Routineversuche in bekannter Weise leicht zu ermitteln.

Als Ausgangsmaterial für die Chlorierung eignen sich grundsätzlich alle Polyäthylene, die mittlere Molekulargewichte $\overline{M}_w$ von $1 \times 10^4$ bis $2 \times 10^6$, vorzugsweise $2 \times 10^4$ bis $3 \times 10^5$ besitzen. Vorzugsweise werden erfindungsgemäß jedoch Polyäthylene aus der Nieder- bzw. Mitteldrucksynthese nach dem sogenannten Ziegler- bzw. Phillipsverfahren und insbesondere nach der ersteren Verfahrensweise verwendet.

Der Schmelzindex MFI 190/2 derartiger Produkte beträgt zweckmäßigerweise 0,2 bis 20 g/10 Min, die reduzierte spezifische Viskosität (0,1 %ige bzw. 0,03 %ige Lösung in Decahydronaphthalin bei 135 °C) 1,3 bis 25 dl/g, die Dichte 0,91 bis 0,97, u. die Erweichungstemperatur 104 bis 128 °C. Die Korngröße sollte zumeist im Bereich von 0,1 bis 500 µm, vorzugsweise 1 bis 300 µm liegen.

Gegebenenfalls kann es von Vorteil sein, ein Niederdruckpolyäthylen einzusetzen, das in bekannter Weise bei einer Temperatur von 100 °C bis zum Kristallit-Schmelzpunkt während einer Dauer von vorzugsweise 5 bis 300 Minuten getempert oder vorgesintert ist (vgl. DE-A 1 720 800).

Der Chlorierung schließen sich die üblichen Reinigungs- und Trocknungsvorgänge an, um das Material von inkludierten und oberflächlich gebundenen Wasser-, Chlor- und Salzsäuremengen zu befreien. Das so getrocknete Produkt ist feinkörnig und rieselfähig, solange es nicht weiteren Temperatur- und Druckbelastungen ausgesetzt wird. Wird das Endprodukt ohne die erfindungsgemäße Konfektionierung nunmehr beispielsweise in Silo-Behältern gelagert, oder verpackt man das Material als Sackware und stapelt es in Lagerräumen, so tritt unter den gegebenen Druckbedingungen, denen das Chlorpolyäthylen ausgesetzt ist, eine mehr oder weniger rasche Verklumpung und Verbackung des Lagergutes ein. Besonders gilt dies bei Lagertemperaturen oberhalb von + 15 °C. Die Folgen sind z.T. sehr weitreichend, sie betreffen nicht nur die Entleerung der Lagerbehälter, sondern führen auch zu verstärkten Inhomogenitäten. Es hat sich überdies gezeigt, daß so agglomerierte Produkte nicht oder nur mit großem Aufwand wieder zerkleinert werden können.

Die Trocknung erfolgt in den üblichen Apparaturen, wie etwa in einem korrosionsfesten, mit Rührer versehenen Turm durch Wirbeltrocknung mittels vorgeheizter Luft. Daran schließt sich dann die Mahlung in den hierfür üblichen Geräten. z.B. Pralltellermühlen, Schnellmischern mit Zerhackervorrichtung etc. an.

Die Imprägnierung des getrockneten und gemahlenen Chlorpolyäthylens mit den Komponenten (a) und (b) wird in den hierfür bekannten Vorrichtungen wie Fluidmischern mit Umdrehungszahlen von 400 bis 1 200 Upm udgl. durchgeführt. Die Rührgeschwindigkeit ist dabei in Abhängigkeit von der Konsistenz des Mischgutes so zu wählen, daß eine stärkere Aufheizung durch Friktionswärme vermieden wird. Unter Umständen kann es sich außerdem empfehlen, das Mischaggregat von außen zu kühlen. Weiterhin kann es von Vorteil sein, an dieser Stelle zusätzlichen Stabilisator zuzufügen, um eine Schädigung des Polymeren bei etwa dennoch auftretenden örtlichen Überhitzungen zu vermeiden. Gegebenenfalls kann auch hier erst die Gesamtmenge an Stabilisator sowie der anderen Zusatzstoffe wie Antioxydantien, UV-Absorber, Farbstoffe, Pigmente, Verarbeitungshilfsmittel etc. zugegeben werden. Grundsätzlich ist diese Imprägnierung auch kontinuierlich möglich.

Da die Komponenten (a) und (b) relativ schnell von der Oberfläche des leichtklebenden Chlorpolyäthylens aufgenommen werden, sind im allgemeinen nur kurze Mischzeiten im Bereich von etwa 1 bis 10 Minuten, vorzugsweise 2 bis 6 Minuten erforderlich. Die erfindungsgemäß eingesetzten Belegungsmittel haften fest an den Partikel-Oberflächen und werden selbst bei einer nach der Imprägnierung evtl. nochmals erforderlich werdenden Zerkleinerung nicht mehr abgetrennt.

Die erfindungsgemäßen Chlorpolyäthylen-Pulver sind rieselfähig und freifließend und zeigen eine gute Lagerstabilität, d.h. auch nach längerer Lagerung unter den hierfür üblichen Druck- und Temperaturbedingungen wird deren Fließverhalten nicht wesentlich beeinträchtigt. Die Verarbeitungseigenschaften werden durch die erfindungsgemäße Oberflächenimprägnierung nicht nachteilig beeinflußt.

Die Erfindung wird nachfolgend anhand von Ausführungsbeispielen erläutert.

Beispiel 1

Es wurde ein Chlorpolyäthylen-Pulver eingesetzt, das hergestellt worden war aus einem Niederdruckpolyäthylen mit einem mittleren Molekulargewicht $\overline{M}_w = 0,5 . 10^5$ und einer Verteilungsbreite $\overline{M}_w/\overline{M}_n$ von 6 durch Chlorierung in salzsaurer Suspension in Temperaturbereich von 20-125 °C und anschließender Trocknung und Mahlung. Das mittlere Molekulargewicht des Chlorpolyäthylens lag bei $1 \times 10^5$, die Restkristallinität betrug 10 %, der Chlorgehalt 42 Gew.-% und die Chlorverteilung war statistisch. Dieses Chlorpolyäthylen-Pulver, von dem 80 % der Partikel einen Durchmesser von höchstens 300 μm und höchstens ca. 5 % einen solchen von kleiner als 50 μm besaßen, wurde in einem Fluidmischer mit einer Umdrehungszahl von 600 Upm bei Raumtemperatur (Außenkühlung) mit einem feinteiligen Pulver-Gemisch aus E-PVC mit einer mittleren Teilchengröße von 10 μm, einem K-Wert von 70 und einem Rüttelgewicht von 0,45 g/cm³ und einem pyrogen hergestelltem Aluminiumoxid mit einer Primärteilchengröße von 20 nm und einer spezifischen Oberfläche nach BET von $100 \pm 10$ m² versetzt. Die Menge an E-PVC betrug 3 Gew.-%, und die an Aluminiumoxid 0,3 Gew.-%, jeweils bezogen auf das Chlorpolyäthylen. Die vorstehend beschriebenen Mischbedingungen verhinderten ein stärkeres Aufheizen des Mischgutes. Nach einer Mischdauer von 3 Minuten war der Imprägniervorgang beendet, d.h. das PVC/Aluminiumoxid-Gemisch war von der Oberfläche des Chlorpolyäthylens aufgenommen und fixiert worden.

Das so erhaltene Produkt wurde anschließend zu Bestimmung der Agglomerierneigung zwei Tage bei 40 °C und einem Flächendruck von 0,6 N/cm² (entsprechend dem Flächendruck einer Stapelpalette auf dem zu unterst liegenden Chlorpolyäthylen-Sack) gelagert. Dabei trat naturgemäß eine gewisse Kompaktierung ein, jedoch war das Material nicht verbacken. Der gesamte Inhalt des Sackes läßt sich durch sehr einfache Methoden, wie Rollen des Sackes oder kurzes Auflockern in Schnellmischern wieder in ein leichtfließendes, rieselfähiges Pulver überführen.

Neben diesem mehr praxisorientiertem Test wurde die Agglomerierneigung nach folgender Methode gemessen : 50 g des feinteiligen Materials (mittl. Korngröße 450 μm) werden in einem einseitig verschlossenem Rohr mit einem Innendurchmesser von 40 mm mit einem Stempel, dessen Gewicht 750 g beträgt, 2 Tage lang bei einer Umgebungstemperatur von 40 °C zusammengedrückt. Nach Beendigung der Prüfung entnimmt man das so tablettierte Material und mißt die Bruchfestigkeit der Tablette. Dazu wird die Tablette in einer Vorrichtung auf einer Stütze beidendig aufgelegt (Stützabstand 4 cm) und in der Mitte stetig steigend über eine kleinflächige Auflage belastet. Die beim Bruch der Tablette erhaltene Belastung wird in Korrelation zum Tablettenquerschnitt als Maß für die Bruch-

festigkeit (N/mm²) angegeben. An dem hier beschriebenen Material beträgt die Bruchfestigkeit 0 N/mm². Prüft man weiterhin das Deagglomerationsverhalten einer weiteren, nach dieser Methode gefertigten Tablette, indem man das Material auf ein Sieb mit einer Maschenweite von 1,5 mm² bringt und unter definierten Rüttelbewegungen den Abrieb bestimmt (DIN 53 734), so stellt man fest, daß besagtes Material nach fünfminütiger Prüfdauer vollkommen zerteilt ist, also nicht mehr in kompakter Form vorliegt und der Abrieb damit 100 % beträgt.

Vergleichsversuch 1

Es wurde die Agglomeration an dem Chlorpolyäthylen gemäß Beispiel 1, das jedoch nicht imprägniert worden war, bestimmt.

Der mehr qualitative, praxisorientierte Test ergab dabei ein vollkommen verbackenes Produkt, das sich mit üblichen Zerkleinerungsvorrichtungen, z.B. Pralltellermühle, Schnellmischer mit Zerhackervorrichtung etc., nicht mehr zu der ursprünglichen Korngröße zerteilen ließ. Vielmehr verblieben im Produkt großvolumige Partikel, die nicht transportierbar waren und nicht weiterverarbeitet werden konnten. Trotz vorzüglicher kautschukelastischer Eigenschaften war dieses Produkt wegen fehlender Lagerfähigkeit praktisch kaum einsetzbar.

Die andere Meßmethode nach Beispiel 1 ergab folgende Werte : Tablettenfestigkeit 0,12 N/mm² ; Abrieb (5 Min.) : 60 %.

Beispiel 2

Es wurde ein Chlorpolyäthylen-Pulver eingesetzt, das hergestellt worden war aus einem Niederdruckpolyäthylen mit einem mittleren Molekulargewicht von $\overline{M}_w = 0,9 . 10^5$ und einer Verteilungsbreite $\overline{M}_w/\overline{M}_n = 10$ durch Chlorierung in salzsaurer Suspension im Temperaturbereich von 90 bis 130 °C unter Verwendung von Kaliumpersulfat als Initiator und Silikonöl sowie Kieselsäure als Agglomerationshemmer. Das mittlere Molekulargewicht des Chlorpolyäthylens betrug 1,4 × 10⁵, der Chlorgehalt 36 Gew.-%, der Feinheitsgrad nach Trocknung und Mahlung 80 % ≤ 250 μm, ca. 10 % ≤ 50 μm und die Restkristallinität 2 %. Die Chlorverteilung war statistisch.

Dieses Chlorpolyäthylen-Pulver wurde wie in Beispiel 1 beschrieben in einem Fluidmischer mit einem feinteiligen Gemisch aus E-PVC mit einer mittleren Teilchengröße von 15 μm, einem K-Wert von 75 und einem Rüttelgewicht von 0,4 g/cm³ und pyrogener Kieselsäure mit einer Primärteilchengröße von ca. 30 nm und einer spezifischen Oberfläche (BET) von 110 m²/g, die durch Imprägnierung mit 1 Gew.% Dimethyl-dichlorsilan hydrophobiert worden war, vermischt. Die Menge an E-PVC betrug dabei 6 Gew.-% und die der Kieselsäure 1 Gew.-%, jeweils bezogen auf Chlorpolyäthylen.

Das so erhaltene Produkt wurde bei Raumtemperatur und einem Flächendruck von ca. 0,6 N/cm² eine Woche lang gelagert. Dabei trat zwar eine Kompaktierung, jedoch kein Verbacken auf, so daß sich durch einfache Mittel wie Rollen oder Aufschlagen der Säcke wieder ein feinteiliges, gut rieselfähiges Pulver der ursprünglichen Kornverteilung erhalten ließ, das leicht extrudier- oder kalandrierbar war.

Die in Beispiel 1 angegebene Meßmethode ergab folgende Werte : Tablettenfestigkeit = 0 N/mm² ; Abrieb (5 Min.) = 100 %.

Vergleichsversuch 2

Beispiel 2 wurde wiederholt, jedoch mit dem Unterschied, daß das Chlorpolyäthylen nicht erfindungsgemäß imprägniert wurde.

Das Produkt war nach der Lagerung gemäß Beispiel 2 vollkommen verbacken und verklebt und ließ sich mit bekannten Zerkleinerungsmethoden nicht mehr in den pulvrigen Zustand zurückführen.

Die Tablettenfestigkeit gemäß Beispiel 2 betrug 0,19 N/mm² und der Abrieb (5 Min.) 70 %.

Beispiel 3

Das hierfür benutzte Chlorpolyäthylen-Pulver war durch Chlorieren eines Niederdruckpolyäthylens mit einem mittleren Molekulargewicht von 1,8 × 10⁵ und einer Verteilungsbreite $\overline{M}_w/\overline{M}_n$ von 5 in salzsaurer Suspension im Temperaturbereich von Raumtemperatur bis 132 °C hergestellt worden. Das mittlere Molekulargewicht des Chlorpolyäthylens betrug 3,0 × 10⁵, der Chlorgehalt 39 Gew.-%, der Feinheitsgrad nach Trocknung und Mahlung 80 % ≤ 400 μm, 0 % ≤ 50 μm und die Restkristallinität 0 %. Die Chlorverteilung war statistisch.

Dieses Chlorpolyäthylen-Pulver wurde gemäß Beispiel 1 mit einer Mischung aus E-PVC einer mittleren Teilchengröße von 8 μm, einem K-Wert von 74 und einem Rüttelgewicht von 0,5 g/cm³ und mit mittels 1 Gew.% Dimethyldichlorsilan hydrophobiertem Kaolin mit einem mittleren Teilchendurchmesser von 0,5 μm und einer Ölaufnahmezahl von 64 imprägniert. Die Menge an E-PVC betrug 5 Gew.-% und die des Kaolins 0,3 Gew.-%, bezogen auf Chlorpolyäthylen.

Das so erhaltene Produkt wurde zur Bestimmung der Agglomerierneigung bei 30 °C und einem Flächendruck von 0,6 N/cm² eine Woche lang gelagert. Die Ergebnisse entsprachen denen des Beispiels 2. Das Gleiche galt auch für die Tablettenfestigkeit (0 N/mm²) und den Abrieb (100 %).

Vergleichsversuch 3

Die Wiederholung des Beispiels 3, jedoch ohne die erfindungsgemäße Imprägnierung lieferte ein Produkt, das bei dem gleichen Lagertest völlig zusammensinterte und nur noch unter Einsatz einer Schneidmühle zerkleinert werden konnte. Dabei wurde jedoch ein gröberes Material als das Ausgangsprodukt erhalten. Die vergrößerten Partikel erwiesen sich als nachteilig, beispielsweise für den Einzug des Materials in einen Extruder mit anschließender Kalandrierung. Durch den schlechten Druckaufbau während der Plastifizierung war das Material uneinheitlich vorerwärmt, was u.a. nachteilige Folgen für die Produktqualität hatte.

Die entsprechenden Werte für die Tablettenfestigkeit und den Abrieb lagen bei 0,07 N/mm² bzw. 79 %.

**Ansprüche**

1. Pulverförmiges Chlorpolyäthylen, gekennzeichnet durch ein mittleres Molekulargewicht $\overline{M}_w$ von $1,2 \times 10^4$ bis $4 \times 10^6$, einen Chlorgehalt von 20 bis 50 Gew.-% und einen Gehalt von

a) 0,5 bis 10 Gewichtsteilen, bezogen auf 100 Gewichtsteile Chlorpolyäthylen, feinteiligem Vinylchloridpolymerisat mit einem mittleren Teilchendurchmesser von 2 bis 20 µm und

b) 0,05 bis 2 Gewichtsteilen, bezogen auf 100 Gewichtsteile Chlorpolyäthylen, feinteiligen, anorganischen Zusatzstoffen, die hydrophobe Oberflächeneigenschaften, einen mittleren Teilchendurchmesser von höchstens 10 µm, eine Ölzahl nach DIN 53 199 von mindestens 60 % und/oder eine Oberfläche nach BET von mindestens 100 m²/g aufweisen, wobei das Mengenverhältnis der Zusatzstoffe (a) und (b) zwischen 30 : 1 bis 2 : 1 liegt und wobei sich beide Zusatzstoffe überwiegend an der Oberfläche der Chlorpolyäthylen-Partikel befinden.

2. Chlorpolyäthylen nach Anspruch 1, dadurch gekennzeichnet, daß seine Restkristallinität 0 bis 30 %, bezogen auf den Kristallisationsgrad des zur Herstellung verwendeten Polyäthylens, beträgt.

3. Chlorpolyäthylen nach Anspruch 1 und 2, dadurch gekennzeichnet, daß die Chlorverteilung statistisch ist.

4. Chlorpolyäthylen nach Anspruch 1 bis 3, dadurch gekennzeichnet, daß die Menge des vorhandenen anorganischen Zusatzstoffes 0,4 bis 0,6 Gewichtsteile pro 100 Gewichtsteile Chlorpolyäthylen beträgt.

5. Chlorpolyäthylen nach Anspruch 1 bis 4, dadurch gekennzeichnet, daß es als anorganischen Zusatzstoff pyrogengewonnenes Aluminiumoxyd, silanisiertes Siliziumdioxid, silanisiertes, calciniertes Aluminiumsilikat oder silanisierten Kaolin enthält.

6. Verfahren zur Herstellung von Chlorpolyäthylen nach Anspruch 1 bis 5, wobei das Chlorpolyäthylen durch Chlorierung aus Polyäthylen mit einem mittleren Molekulargewicht $\overline{M}_w$ von $1 \times 10^4$ bis $2 \times 10^6$ hergestellt, anschließend getrocknet, gemahlen und vor oder nach der Mahlung gegebenenfalls mit an sich bekannten Stabilisatoren, Antioxydantien und anderen Additiven versetzt wird, dadurch gekennzeichnet, daß das gemahlene Chlorpolyäthylen-Pulver mit den beiden Zusatzstoffen (a) und (b) gemäß Anspruch 1 bis 5 vermischt wird.

7. Verwendung des Chlorpolyäthylens gemäß den Ansprüchen 1 bis 5 zur Herstellung von Stoffgemischen, welche neben Polymeren sowie gegebenenfalls Stabilisatoren und anderen bekannten Zusatzstoffen dieses Chlorpolyäthylen enthalten.

**Claims**

1. Pulverulent chloropolyethylene characterized by an average molecular weight $\overline{M}_w$ of $1.2 \times 10^4$ to $4 \times 10^6$, a chlorine content of 20 to 50 % by weight and a content of

a) 0.5 to 10 parts by weight, calculated on 100 parts by weight of chloropolyethylene, of fine-grained vinyl chloride polymer having an average particle diameter of 2 to 20 µm and

b) 0.05 to 2 parts by weight, calculated on 100 parts by weight of chloropolyethylene, of fine-grained, inorganic additives having hydrophobic surface properties, an average particle diameter of at most 10 µm, an oil number (according to DIN 53, 199) of at least 60 % and/or a BET surface of at least 100 m²/g, the proportion of additives a) and b) being in the range of from 30 : 1 to 2 : 1 and the two additives being preponderantly distributed on the surface of the chloropolyethylene particles.

2. Chloropolyethylene as claimed in claim 1, wherein the residual crystallinity is from 0 to 30 %, calculated on the degree of crystallinity of the polyethylene used for its manufacture.

3. Chloropolyethylene as claimed in claim 1 or 2, wherein the chlorine is statistically distributed.

4. Chloropolyethylene as claimed in claims 1 to 3, containing 0.1 to 0.6 part by weight of inorganic additive for 100 parts by weight of chloropolyethylene.

5. Chloropolyethylene as claimed in claims 1 to 4, wherein the inorganic additive is aluminum oxide produced by a pyrogenic process, silanized silicium dioxide, silanized and calcined aluminum silicate, or silanized kaolin.

6. Process for the manufacture of a chloropolyethylene as claimed in claims 1 to 5, wherein said chloropolyethylene is prepared by chlorination of polyethylene having an average molecular weight $\overline{M}_w$ of $1 \times 10^4$ to $2 \times 10^6$, subsequently dried and ground and blended, prior to or after grinding, with known stabilizers, antioxidants and other additives, which comprises mixing the ground pulverulent chloropolyethylene with the additives a) and b) as defined in claims 1, 4 and 5.

7. Use of a chloropolyethylene as claimed in claims 1 to 5 for the manufacture of substance mixtures optionally containing, in addition to said chloropolyethylene, stabilizers and other known additives.

**Revendications**

1. Chloropolyéthylène pulvérulent caractérisé en ce qu'il a une masse moléculaire moyenne $\overline{M}_p$

de 1,2 × 10⁴ à 4 × 10⁶, une teneur en chlore de 20 à 50 % en poids et en ce qu'il contient

a) de 0,5 à 10 parties en poids, pour 100 parties en poids du chloropolyéthylène, d'un polymère du chlorure de vinyle en fines particules qui a un diamètre moyen des particules de 2 à 20 μm et

b) de 0,05 à 2 parties en poids, pour 100 parties en poids du chloropolyéthylène, d'additifs minéraux en fines particules qui ont des propriétés de surface hydrophobes, un diamètre moyen des particules d'au plus 10 μm, un indice d'huile (norme DIN 53 199) d'au moins 60 % et/ou une surface BET d'au moins 100 m²/g, le rapport entre les quantités des additifs (a) et les quantités des additifs (b) étant compris entre 30 : 1 et 2 : 1 et les deux types d'additifs se trouvant principalement à la surface des particules du chloropolyéthylène.

2. Chloropolyéthylène selon la revendication 1, caractérisé en ce que sa cristallinité résiduelle est de 0 à 30 % relativement au degré de cristallisation du polyéthylène utilisé pour sa préparation.

3. Chloropolyéthylène selon l'une des revendications 1 et 2, caractérisé en ce que la répartition du chlore est statistique.

4. Chloropolyéthylène selon l'une quelconque des revendications 1 à 3, caractérisé en ce que la quantité de l'additif minéral présent est de 0,4 à 0,6 partie en poids pour 100 parties en poids du chloropolyéthylène.

5. Chloropolyéthylène selon l'une quelconque des revendications 1 à 4, caractérisé en ce qu'il contient, comme additif minéral, de l'alumine obtenue par pyrogénation, de la silice silanisée, du silicate d'aluminium calciné silanisé ou du kaolin silanisé.

6. Procédé de préparation d'un chloropolyéthylène selon l'une quelconque des revendications 1 à 5, ce chloropolyéthylène ayant été obtenu par chloration d'un polyéthylène d'une masse moléculaire moyenne $\overline{M}_p$ comprise entre 1 × 10⁴ et 2 × 10⁶, puis séché, broyé et éventuellement additionné, avant ou après le broyage, de stabilisants, d'anti-oxydants et d'autres additifs connus, procédé caractérisé en ce que le chloropolyéthylène pulvérulent broyé est mélangé avec les deux additifs (a) et (b) selon l'une quelconque des revendications 1 à 5.

7. Application du chloropolyéthylène selon l'une quelconque des revendications 1 à 5 pour la préparation de mélanges qui contiennent ce chloropolyéthylène en plus de polymères et éventuellement de stabilisants ainsi que d'autres additifs connus.